# EUROPÄISCHE PATENTSCHRIFT

(11) **EP 1 537 352 B1**
(45) Veröffentlichungstag und Bekanntmachung des Hinweises auf die Patenterteilung: **18.06.2008**
(21) Anmeldenummer: 03794992.2
(22) Anmeldetag: 04.09.2003
(51) Int. Cl.: F16L 41/08

(54) **HOCHDICHTE ANSCHLUSSEINRICHTUNG**
HIGHLY TIGHT CONNECTION DEVICE
DISPOSITIF DE RACCORDEMENT TRES ETANCHE

(30) Priorität: 10.09.2002 DE 10241921
(43) Veröffentlichungstag der Anmeldung: 08.06.2005
(73) Patentinhaber: Eaton Fluid Power GmbH, 76532 Baden-Baden (DE)
(72) Erfinder: WELLE, Stefan, 76549 Hügelsheim (DE)
(74) Vertreter: Rüger, Barthelt & Abel Patentanwälte
(86) Internationale Anmeldenummer: PCT/EP2003/009837
(87) Internationale Veröffentlichungsnummer: WO 2004/025165

(56) Entgegenhaltungen:
- DE-C- 19 521 363
- GB-A- 2 153 908
- US-A- 5 829 794
- US-A- 5 918 912

## Beschreibung

Die-Erfindung betrifft eine Anschlusseinrichtung zum Verbinden einer Fluidleitung mit einem anderen Element.

Fluid führende Anlagen enthalten in der Regel mehrere Anschlusseinrichtungen, mit denen Leitungen, z.B. Rohre oder Schläuche untereinander verbunden oder an Aggregate, wie Kompressoren, Kondensatoren, Kühler, Verdampfer oder andere Baugruppen angeschlossen werden. Solche Anschlusseinrichtungen müssen unter den gegebenen Bedingungen dicht sein. Dies stellt insbesondere dann hohe Ansprüche an die Anschlusseinrichtung, wenn hohe und insbesondere zwischen verschiedenen Druckwerten wechselnde Fluiddrücke auf die Anschlusseinrichtung einwirken. Für geschlossene Fluidsysteme wird eine möglichst geringe Leckrate gefordert. Niedermolekulare Fluide wie CO2 stellen hier besonders hohe Anforderungen. Außerdem müssen häufig sonstige Randbedingungen beachtet werden, zu denen Temperaturwechselbeständigkeit, Vibrationsfestigkeit, Korrosionssicherheit, Langzeitstabilität, Montagefreundlichkeit, Wartungsfreundlichkeit und ähnliches gehören.

Aus der US-PS 5513882 ist eine Anschlusseinrichtung bekannt, zu der ein becherförmiges Aufnahmestück und ein diesem zugeordnetes Rohrende mit einem Radialflansch gehören. An dem Boden des becherförmigen Aufnahmestücks ist in einer Ringnut ein O-Ring konzentrisch zu einem Fluiddurchgangskanal angeordnet. An diesem O-Ring und den umgebenden ringförmigen Bereichen des Bodens stützt sich der Ringflansch des Gegenstücks ab. Zur Sicherung der Verbindung wird quer zu dem Anschlussstück ein u-förmiger Bügel durch entsprechende Bohrungen des Bechers gesteckt. Der O-Ring bewirkt die Abdichtung.

Aus der DE 100 58 087 A1 ist darüber hinaus eine Anschlusseinrichtung bekannt, zu der ebenfalls ein Anschlussstück mit einem Radialflansch und ein becherförmiges Aufnahmestück mit einem bodenseitig angeordneten O-Ring gehören. Zur Einstellung einer definierten Verformung des O-Rings und zum Erhalt einer mechanisch festen Verbindung der Teile der Anschlusseinrichtung ist dieser eine Keilspanneinrichtung zugeordnet. Diese enthält einen Spannkeil der den Radialflansch fest gegen Anlageflächen an den becherförmigen Teil spannt.

Aus der GB 2153908 A ist eine Klemmvorrichtung zur Befestigung von Kraftstoffeinspritzdüsen bekannt. Diese Klemmvorrichtung umfasst einen geraden Klemmhebel, der mit einer balligen Fläche gegen die Brennstoffeinspritzdüse drückt, wenn diese an ihrem Sitz gehalten ist. Der Hebel stützt sich mit einem Ende an einem Widerlager ab während er mit seinem anderen Ende mittels einer Schraube festgespannt wird.

Die Brennstoffeinspritzdüse greift etwa mittig an dem Hebel an. Damit liefert der Hebel hinsichtlich der Spannkraft eine Kraftübersetzung von etwa 1 zu 2.

Davon ausgehend ist es Aufgabe der Erfindung eine Anschlusseinrichtung zu schaffen, die insbesondere für Fluid führende Systeme geeignet ist, bei denen das Fluid zumindest zeitweise unter hohem Druck steht.

Diese Aufgabe wird mit der Anschlusseinrichtung nach Anspruch 1 gelöst:

Die Anschlusseinrichtung dient zum Verbinden einer Fluidleitung mit einem anderen Element, das mit wenigstens einer Dichtfläche versehen ist. Das andere Element kann ein Teil einer Fluid führenden Einrichtung, eines Aggregats oder eines sonstigen Elements, wie ein Kupplungsstück oder dergleichen, sein. Das anzuschließende Leitungsende weist einen Radialvorsprung auf, an dem ein Klemmhebel angreifen kann, um das Leitungsende axial gegen das Element zu spannen. Zwischen der Axialdichtfläche des Leitungsendes und der Dichtfläche des Elements ist ein Dichtungselement angeordnet, das den Besonderheiten des abzudichtenden Fluids und seinen Drücken Rechnung trägt.

Der Klemmhebel weist einen Stützabschnitt zur Abstützung an einem Widerlager, eine dem Radialvorsprung zugeordnete Druckfläche und einen Befestigungsabschnitt auf, an dem eine Spanneinrichtung, beispielsweise in Form einer Schraube, angreifen kann. Die Druckfläche ist zwischen dem Stützabschnitt und dem Befestigungsabschnitt angeordnet. Vorzugsweise ist der zwischen der Druckfläche und dem Widerlager bzw. Stützabschnitt ausgebildete Hebelarm wesentlich kürzer als der zwischen dem Widerlager und dem Befestigungsabschnitt bzw. der Spanneinrichtung ausgebildete Hebelarm. Dadurch kann mit einer einzigen Spanneinrichtung beispielsweise einer einzigen Schraube durch die entstehende Hebeluntersetzung eine sehr hohe axiale Spannkraft erzeugt und auf das Leitungsende ausgeübt werden. Der in dem Fluidsystem herrschende Druck wirkt über die von der Dichtfläche eingeschlossenen Kreisfläche als Axialkraft mit der Tendenz, das Leitungsende von dem Element weg zu bewegen. Soll die Anschlusseinrichtung bis zu Berstdrücken von mehreren hundert Bar dicht sein können bei schon geringen Querschnitten von beispielsweise einem Quadratzentimeter erhebliche Axialkräfte von mehreren tausend N entstehen. Diese lassen sich Dank der Hebeluntersetzung mit relativ schwach dimensionierten Spanneinrichtungen (beispielsweise Maschinenschraube M5 oder M6) sicher abfangen.

Die Druckfläche greift vorzugsweise nur mittig an dem Radialflansch an. Im Einzelnen kann dies eine linien- oder streifenförmiger Flächenbereich sein, der parallel zu einer von dem Widerlager definierten Scharnierachse orientiert ist. Dieser linien-oder flächenhafte Berührungsbereich erstreckt sich in Radialrichtung an dem Radialvorsprung quer zu dem Klemmhebel und liegt auf einer durch die Mitte des Radialvorsprungs gehenden Linie. Dadurch wird der von dem Klemmhebel ausgeübte Druck gleichmäßig auf die Axialdichtfläche und auf die an dem Element ausgebildete Dichtfläche übertragen, so dass das Dichtungselement entlang seines gesamten Umfangs einem gleichmäßigen Axialdruck ausgesetzt ist. Lokale Undichtigkeiten durch asymmetrische Kraftverteilung werden dadurch vermieden.

Der Klemmhebel übt Axialkraft auf das Leitungsende aus, wobei die Dichtfläche des Elements für die Ausrichtung des Leitungsendes als Bezugsfläche dient. Die genaue Ausrichtung des Leitungsendes gegenüber dem Element ist somit nur von der Dichtfläche und der Axialdichtfläche bestimmt, nicht aber von sonstigen Flächenberührungen. Diese Maßnahme schafft die Grundlage für eine gleichmäßige Flächenpressung an dem Dichtungselement, was besonders geringe Leckraten und hohe Druckfestigkeiten ermöglicht. Zusätzlich kann das Leitungsende mit Stützelementen versehen sein, die es, wenn es seitlich mit Biegekräften belastet wird, abstützen. Die Ausrichtung in kräftefreiem Zustand wird jedoch ausschließlich über die Dichtfläche und die Axialdichtfläche vorgenommen. Bei nachgiebigen Dichtungselementen kann an dem Element oder dem Radialvorsprung zusätzlich eine Abstützfläche vorgesehen sein; die eine zu starke Kompression des Dichtungselements verhindert. In beiden Fällen wird jedoch die Ausrichtung des Leitungsendes an dem Element in der Nähe der Dichtungsstelle durch die dort vorhandenen Flächen festgelegt und nicht durch die durch den Klemmhebel gebildete Befestigungseinrichtung.

Das Leitungsende kann mit einem Anschlussstück versehen sein, an dem der Radialvorsprung ausgebildet ist. Dieser kann ein Ring- oder Scheibenflansch sein, der in' Umfangsrichtung durchgehend oder unterbrochen ausgebildet ist. Das Anschlussstück kann mit der Fluidleitung verlötet oder verschweißt oder anderweitig mit dieser verbunden sein.

Es ist auch möglich, den Radialvorsprung an der Fluidleitung anzuformen, so dass das Anschlussstück und die Fluidleitung einstückig ausgebildet sind.

Die Axialdichtfläche ist vorzugsweise eine Planfläche. Bedarfsweise kann sie jedoch auch als Kegelsitzfläche ausgebildet sein.

Das Dichtungselement kann ein O-Ring, vorzugsweise ein Metall-O-Ring, sein. Dieser ist beispielsweise durch ein kreisförmiges, in sich geschlossenes Federstahlröhrchen gebildet, das mit unter Druck stehendem Gas (Stickstoff) gefüllt ist. Vorzugsweise ist die Dichtung jedoch eine Scheibendichtung, die von vornherein in Axialrichtung relativ flach ist. Beispielsweise kann sie durch eine mit einem Dichtungsmaterial beschichtete Metallscheibe gebildet sein. Das Dichtungsmaterial kann eine dünne Elastomerschicht sein. Sie kann auch durch eine dünne deformierbare Schicht aus einem Metall gebildet sein, dessen Deformierbarkeit größer ist als die der Metallscheibe. Es lassen sich hiermit äußerst geringe Leckraten bei hoher mechanischer Festigkeit und Widerstandsfähigkeit erreichen.

Der Klemmhebel kann unverlierbar an einer anzuschließenden Leitung angebracht sein. Er weist dann eine Öffnung mit einem geschlossenen Rand auf, durch die sich das Leitungsende erstreckt. Es ist jedoch auch möglich, hier einen unterbrochenen Rand vorzusehen, so dass der Klemmhebel bei Bedarf an das Leitungsende angesetzt werden kann.

Weitere Einzelheiten vorteilhaften Ausführungsformen der Erfindung erschließen sich aus der Beschreibung, der Zeichnung sowie Unteransprüchen.

In der Zeichnung sind Ausführungsbeispiele der Erfindung veranschaulicht. Es zeigen:
- Figur 1: die erfindungsgemäße Anschlusseinrichtung in schematisierter, längs geschnittener Darstellung,
- Figur 2: die Anschlusseinrichtung nach Figur 1 in einer ausschnittsweisen Darstellung,
- Figur 3: eine weiter abgewandelte Ausführungsform der Anschlusseinrichtung in ausschnittsweiser, längs geschnittener Darstellung,
- Figur 4: ein Dichtungselement für eine Anschlusseinrichtung in Schnittdarstellung.

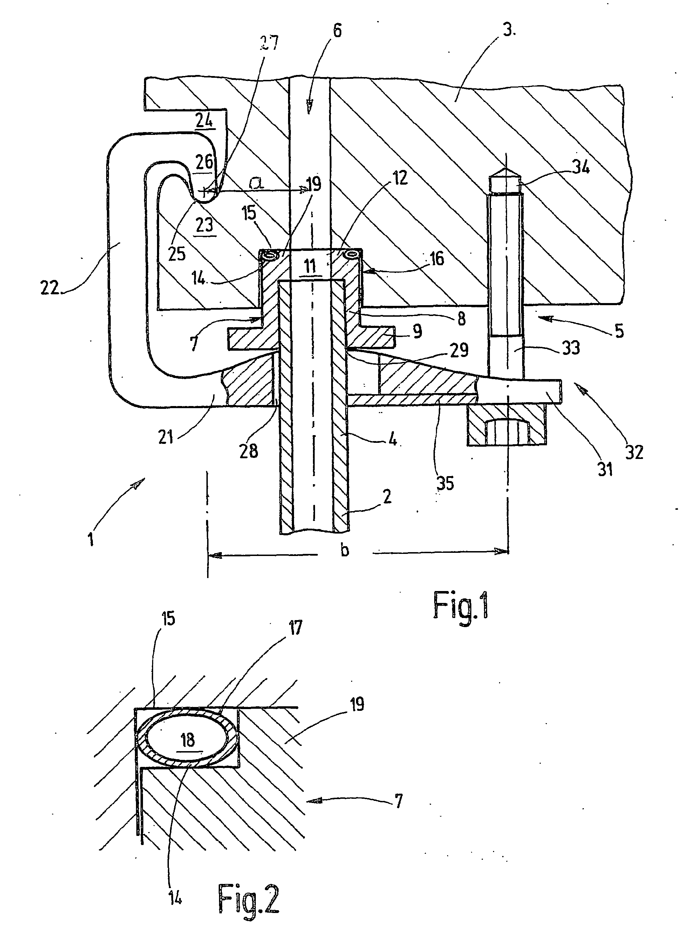

In Figur 1 ist eine Anschlusseinrichtung 1 veranschaulicht, wie sie zum Anschließen einer Fluidleitung 2 an ein anderes Element 3 dienen kann, das eine fluidtechnische Einrichtung, eine Leitung oder dergleichen sein kann. Zu der Anschlusseinrichtung 1 gehört ein Leitungsende 4 der Fluidleitung 2 und ein Anschlussbereich 5 des Elements 3. Beide sind von einem Fluidkanal 6 durchsetzt, der nach außen hin abgedichtet ist. Das Leitungsende 4 ist mit einem Anschlussstück 7 versehen, das einen hohlzylindrischen Abschnitt 8 mit zylindrischer Außenfläche und zylindrischer Innenfläche aufweist. An dem von dem Element 3 abliegenden Ende schließt sich an den Abschnitt 8 eine scheibenförmiger Flansch an, der einen Radialvorsprung 9 bildet. An seinem anderen axialen Ende weist das Anschlussstück 7 einen von einer zentralen Bohrung 11 durchsetzten Boden 12 auf, an dem eine Axialdichtfläche 14 ausgebildet ist. Die Axialdichtfläche 14 ist eine zu dem Fluidkanal 6 konzentrische Ringfläche, die im vorliegenden Ausführungsbeispiel plan ausgebildet ist. Der Axialdichtfläche ist eine ebenfalls ringförmige ebene Dichtfläche 15 zugeordnet, die an dem Element 3 koaxial zu dem Fluidkanal 6 angeordnet ist. Die Dichtfläche 15 ist an dem Boden einer von dem Fluidkanal 6 durchsetzten Sackbohrung 16 ausgebildet, deren zylindrische innere Wandung einen Durchmesser aufweist, der den Außendurchmesser des Anschlussstücks 7 übersteigt. Dieses sitzt somit mit Spiel in der Sackbohrung 16.

Zwischen der Axialdichtfläche 14 und der Dichtfläche 15 ist ein Dichtungselement 17 angeordnet, das gesondert aus Figur 2 hervorgeht. Das Dichtungselement 17 ist im vorliegenden Ausführungsbeispiel durch einen Metall-O-Ring gebildet. Der in entspanntem Zustand thorusförmige Metall-O-Dichtring ist ein in sich geschlossenes und somit endloses Federstahlröhrchen, dessen Innenraum 18 mit unter Druck stehendem Stickstoff gefüllt ist.

In unmittelbarer.Nachbarschaft zu der Axialdichtfläche 14 ist an dem Anschlussstück 7 ein Vorsprung 19 ausgebildet, dessen axiale Stirnfläche an dem Boden der Sackbohrung 16 anliegt und somit die Deformation des Dichtungselements 17 begrenzt und eine feste Anlage für das Anschlussstück 7 schafft.

Zu der Anschlusseinrichtung 1 gehört außerdem ein Klemmhebel 21 (Figur 1) der dazu dient, das Anschlussstück 7 axial gegen den Boden der Sackbohrung 16 zu spannen. Dazu weist der Klemmhebel 2.1 einen Stützabschnitt 22 auf, der zur Lagerung des Klemmhebels 21 an dem Element 3 dient. Im vorliegenden Ausführungsbeispiel ist der Stützabschnitt 22 als Haken ausgebildet, der ein an dem Element 3 ausgebildetes Widerlager 23 hintergreift. Das Widerlager ist beispielsweise durch eine Ausnehmung 24 mit einer rinnenförmigen, von der Sackbohrung 16 weg gerichteten Lagerfläche 25 gebildet. Eine der Krümmung der Lagerfläche 25 angepasste Nase 26 liegt an der Lagerfläche 25 an. Die Wölbung der Lagerfläche 25 und der Nase 26 legen eine Schwenkachse 27 fest, die als Scharnierachse angesehen werden kann.

An dem Klemmhebel 21 ist außerdem eine Öffnung 28 ausgebildet, durch die sich das Leitungsende 4 erstreckt. An die Öffnung 28 schließt sich eine Druckfläche 29 an, die vorzugsweise etwas gewölbt oder ballig ausgebildet ist. Dadurch liegt die Druckfläche 29 bezüglich der Darstellung in Figur 1 lediglich oberhalb und unterhalb der Zeichenebene in linien- oder streifenförmigen Bereichen an dem ebenen Radialvorsprung 9 an. Dieser Berührungsbereich liegt somit auf einer senkrecht zur Zeichenebene stehenden Linie, die parallel zu der Schwenkachse 27 ausgerichtet ist. Der quer zu dem Leitungsende zu messende Abstand a zwischen der Scharnier- oder Schwenkachse 27 und der Position der Flächenberührung zwischen der Druckfläche 29 und dem Radialvorsprung 9 bildet einen kurzen Hebelarm.

Der Klemmhebel 21 weist an dem dem Stützabschnitt 22 gegenüber liegenden Ende einen Befestigungsabschnitt 31 auf, dem eine Spanneinrichtung 32, z.B. in Form einer Maschinenschraube 33, zugeordnet ist. Diese ist in eine Gewindebohrung 34 des Elements 3 eingeschraubt und durchgreift den Befestigungsabschnitt 31 des Klemmhebels 21. Der horizontale bzw. quer zu dem Leitungsende 4 zu messende Abstand b zwischen der Schwenkachse 27 und der Maschinenschraube 33 bildet einen längeren Hebelarm zum Spannen der Anschlusseinrichtung 1.

In einer entsprechenden Ausnehmung oder Nut des Klemmhebels 21 kann ein Klemmstück 35 angeordnet sein, das bei einer entsprechenden Bohrung von der Maschinenschraube 33 durchgriffen wird. Die Bohrung ist vorzugsweise länglich oder weist bezüglich der Maschinenschraube 33 wenigstens ein geringes Übermaß auf. Es erstreckt sich etwa bis zu dem Leitungsende 4, um diesem eine Stützfläche zuzukehren. Die Öffnung 28 weist von dem Leitungsende 4 in Richtung auf den Befestigungsabschnitt 31 gesehen, ein erhebliches Übermaß auf, so dass die Öffnungswandung hier dem Leitungsende 4 keine Stütze bietet. Dies wird von dem Klemmstück 35 übernommen. Dennoch ist das Klemmstück 35 vorzugsweise so ausgebildet und angeordnet, dass das Leitungsende 4 bei gespannter.Anschlusseinrichtung 1 im kräftefreien Zustand ohne Wandberührung durch die Öffnung 28 führt. Dies wird angestrebt, um die Ausrichtung des Leitungsendes 4 allein von der Anlage des Vorsprungs 19 an den Boden der Sackbohrung 16 festlegen zu lassen.

Die insoweit beschriebene Anschlusseinrichtung 1 funktioniert wie folgt:

Zur Herstellung der Verbindung wird von einer Fluidleitung 2 ausgegangen, die mit dem entsprechenden Anschlussstück 7 und dem Klemmhebel 21. versehen ist. Es werden nun das Anschlussstück 7 mit seinem Dichtungselement 17 in die Sackbohrung 16 eingeführt und der Klemmhebel 21 hinter das Widerlager 23 gehakt. Dies ist bei zunächst noch entferntem Klemmstück 35 in Folge einer Seitenbewegung des Klemmhebels 21 ohne Weiteres möglich. Sodann wird die Maschinenschraube 33 nebst Klemmstück 35 in den Befestigungsabschnitt 31 des Klemmhebels 21 eingesetzt und festgezogen. Dabei wirkt die axiale Spannkraft der Maschinenschraube 13 um den Faktor b/a verstärkt als axiale Klemmkraft auf das Anschlussstück 7 und presst dieses in die Sackbohrung 16. Es kommt dabei weder auf die Ausrichtung des Klemmhebels noch auf sonstige Justagen an. Die Flächenpressung an der Stirnseite des Anschlussstücks 7 ist entlang des Umfangs weitgehend konstant. Die Deformation des Dichtungselements 17 ist durch die Anlage des Vorsprungs 19 an den Boden der Sackbohrung 16 begrenzt. Durch die metallische Abdichtung werden besonders geringe Leckraten erreicht.

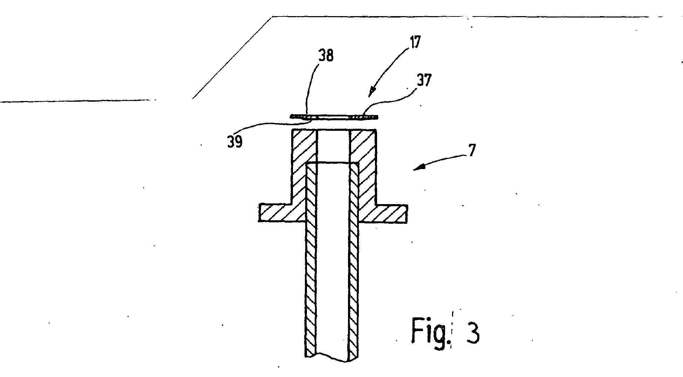

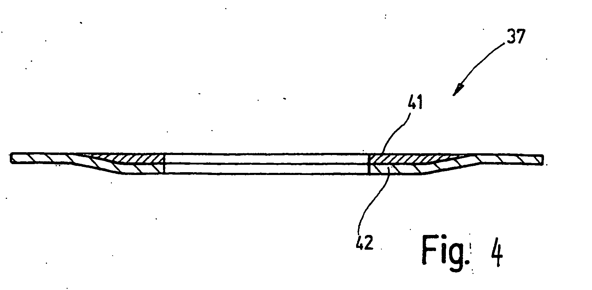

Die in Figur 3 veranschaulichte Ausbildung des Anschlussstücks 7 und des Dichtungselements 17 kann bei allen vor- und nachstehend beschriebenen Ausführungsformen Anwendung finden. Das Dichtungselement 17 ist als Dichtungsscheibe 37 mit zwei im Wesentlichen flachen, voneinander weg weisenden Dichtungsflächen 38, 39 ausgebildet. Die Dichtungsscheibe 37 ist in Figur 4 gesondert veranschaulicht. Sie weist einen Metallträger 41 aus einem harten, wenig verformbaren Material auf. Dieser ist mit einer dünnen Dichtungsschicht 42 aus einem Elastomer oder einem verformbaren Metall, wie Weichaluminium, Blei, Zinn oder dergleichen, versehen. Die Dichtungsscheibe 37 ist zwischen der plan ausgebildeten Stirnseite des Anschlussstücks 7 und dem Boden der Sackbohrung 16 angeordnet. Die Axialdichtfläche 14 stützt sich somit über die Dichtungsscheibe 37 mittelbar an der Dichtfläche 15 ab. Bei dieser Art der Abdichtung bestimmt die Dichtungsscheibe 37 die Ausrichtung des Leitungsendes 4 an dem Element 3. Der Klemmhebel 21 übt lediglich den axialen Druck aus, wobei von der Anschlusseinrichtung her keine'sonstigen seitlichen oder sonstwelchen Kräfte auf das Anschlussstück 7 einwirken.

Die Anschlusseinrichtung 1 weist ein Anschlussstück 7 auf, das an seiner Stirnseite abdichtend an einer Dichtfläche 15 eines Elements 3 sitzt. Die Ausrichtung des Anschlussstücks 7 zu der Dichtfläche 15 wird allein von der Flächenberührung zwischen dem Anschlussstück 7 und der Dichtfläche 15 (mit oder ohne Zwischenlager eines Dichtungselements 17) bestimmt. Die nötige Axialkraft bringt ein der Dichtstelle benachbart, schwenkbar gelagerter Klemmhebel 21 auf, an dessen längerem Hebelarm eine Spanneinrichtung 32 angreift. Eine derartige Anschlusseinrichtung ist besonders einfach in der Herstellung und Montage und erweist sich als überaus leicht zu montieren und zuverlässig sowie leckarm.

## Patentansprüche

1. Anschlusseinrichtung (1) zum Verbinden einer Fluidleitung (2) mit einem anderen Element (3), das eine Dichtfläche (15) aufweist,
mit einem Leitungsende (4), das zu der Fluidleitung (2) gehört und an dem ein Radialvorsprung (9) und eine Axialdichtfläche (14) ausgebildet sind,
mit, einem Dichtungselement (17), das zwischen der Axialdichtfläche (14) und der Dichtfläche (15) angeordnet ist,
mit einem Klemmhebel (21), der einen Stützabschnitt (22) zur Abstützung an einem an dem Element (3) vorgesehenen Widerl,ager (23), eine dem Radialvorsprung (9) zugeordnete Druckfläche (29) und einen Befestigungsabschnitt (31) aufweist, mit dem er mittels einer Spanneinrichtung (32) gegen das Element (3) spannbar ist,
**dadurch gekennzeichnet, dass**
der Stützabschnitt (22) als Haken ausgebildet ist, der das an dem Element (3) ausgebildete Widerlager (23) hintergreift.

2. Anschlusseinrichtung nach Anspruch 1, **dadurch gekennzeichnet, dass** das Leitungsende (4) mit einem Anschlussstück (7) versehen ist, an dem der Radialvorsprung (9) ausgebildet ist.

3. Anschlusseinrichtung nach Anspruch 2, **dadurch gekennzeichnet, dass** das Anschlussstück (7) mit der Fluidleitung (2) verlötet ist.

4. Anschlusseinrichtung nach Anspruch 1, **dadurch gekennzeichnet, dass** der Radialvorsprung (9) an der Fluidleitung (2) angeformt ist.

5. Anschlusseinrichtung nach Anspruch 1, **dadurch gekennzeichnet, dass** der Radialvorsprung (9) durch einen Scheibenflansch gebildet ist.

6. Anschlusseinrichtung nach Anspruch 1, **dadurch gekennzeichnet, dass** die Axialdichtfläche (14) eine Planfläche ist.

7. Anschlusseinrichtung nach Anspruch 1, **dadurch gekennzeichnet, dass** der Axialdichtfläche (14) ein Stützvorsprung (19) benachbart ist.

8. Anschlusseinrichtung nach Anspruch 1, **dadurch gekennzeichnet, dass** das Dichtungselement (17) ein Metall-O-Ring ist.

9. Anschlusseinrichtung nach Anspruch 1, **dadurch gekennzeichnet, dass** das Dichtungselement (17) eine mit einem Dichtungsmaterial beschichtete Metallscheibe (37) ist.

10. Anschlusseinrichtung nach Anspruch 9, **dadurch gekennzeichnet, dass** das Dichtungsmaterial ein Elastomer ist.

11. Anschlusseinrichtung nach Anspruch 9, **dadurch gekennzeichnet, dass** das Dichtungsmaterial ein Metall ist, dessen Deformierbarkeit größer ist als die der Metallscheibe.

12. Anschlusseinrichtung nach Anspruch 1, **dadurch gekennzeichnet, dass** der Klemmhebel (21) eine Öffnung (28) aufweist, durch die sich die Fluidleitung (2) erstreckt.

13. Anschlusseinrichtung nach Anspruch 12, **dadurch gekennzeichnet, dass** die Öffnung (28) einen geschlossenen Rand aufweist.

14. Anschlusseinrichtung nach Anspruch 12, **dadurch gekennzeichnet, dass** die Öffnung (28) einen unterbrochenen Rand aufweist.

15. Anschlusseinrichtung nach Anspruch 1, **dadurch gekennzeichnet, dass** der Stützabschnitt (22) des Klemmhebels (21) und das Widerlager (23) ein Scharnier bilden.

16. Anschlusseinrichtung nach Anspruch 1, **dadurch gekennzeichnet, dass** die Druckfläche (29) eine gewölbte Fläche ist.

17. Anschlusseinrichtung nach Anspruch 1, **dadurch gekennzeichnet, dass** die Druckfläche (29) den Radialvorsprung (9) mittig berührt.

18. Anschlusseinrichtung nach Anspruch 1, **dadurch gekennzeichnet, dass** die Spanneinrichtung (32) durch eine Schraube (33) gebildet ist.

## Claims

1. Connection device (1) for connecting a fluid pipe (2) to another element (3), which has a sealing surface (15),
with a pipe end (4), which belongs to the fluid pipe (2) and on which a radial projection (9) and an axial sealing surface (14) are configured,
with a sealing element (17), which is arranged between the axial sealing surface (14) and the sealing surface (15),
with a clamping lever (21), which has a support section (22) for support against an abutment (23) provided on the element (3), a pressure surface (29) associated with the radial projection (9) and a fastening section (31), with which it can be clamped against the element (3) by means of a clamping device (32),
**characterised in that**
the support section (22) is configured as a hook, which engages behind the abutment (23) configured on the element (3).

2. Connection device according to claim 1, **characterised in that** the pipe end (4) is provided with a connection piece (7), on which the radial projection (9) is configured.

3. Connection device according to claim 2, **characterised in that** the connection piece (7) is soldered to the fluid pipe (2).

4. Connection device according to claim 1, **characterised in that** the radial projection (9) is moulded on the fluid pipe (2).

5. Connection device according to claim 1, **characterised in that** the radial projection (9) is formed by a disc flange.

6. Connection device according to claim 1, **characterised in that** the axial sealing surface (14) is a plane surface.

7. Connection device according to claim 1, **characterised in that** a support projection (19) is arranged adjacent to the axial sealing surface (14).

8. Connection device according to claim 1, **characterised in that** the sealing element (17) is a metal O-ring.

9. Connection device according to claim 1, **characterised in that** the sealing element (17) is a metal disc (37) coated with a sealing material.

10. Connection device according to claim 9, **characterised in that** the sealing material is an elastomer.

11. Connection device according to claim 9, **characterised in that** the sealing material is a metal, the deformability of which is greater than that of the metal disc.

12. Connection device according to claim 1, **characterised in that** the clamping lever (21) has an opening (28), through which the fluid pipe (2) extends.

13. Connection device according to claim 12, **characterised in that** the opening (28) has a closed edge.

14. Connection device according to claim 12, **characterised in that** the opening (28) has a discontinuous edge.

15. Connection device according to claim 1, **characterised in that** the support section (22) of the clamping lever (21) and the abutment (23) form a hinge.

16. Connection device according to claim 1, **characterised in that** the pressure surface (29) is an arched surface.

17. Connection device according to claim 1, **characterised in that** the pressure surface (29) touches the radial projection (9) centrally.

18. Connection device according to claim 1, **characterised in that** the clamping device (32) is formed by a screw (33).

## Revendications

1. Dispositif de raccordement (1), pour relier une conduite à fluide (2) à un autre élément (3) présentant une surface d'étanchéité (15),
avec une extrémité de conduite (4), appartenant à la conduite de fluide (2) et sur laquelle sont réalisées une saillie radiale (9) et une surface d'étanchéité axiale (14),
avec un élément d'étanchéité (17), disposé entre la surface d'étanchéité axiale (14) et la surface d'étanchéité (15),
avec un levier de serrage (21), présentant un tronçon d'appui (22) pour l'appui sur un contre-appui (23) prévu sur l'élément (3), sur surface de pressage (29) associée à la saillie radiale (9), et un tronçon de fixation (31), avec lequel il est susceptible d'être serré contre l'élément (3) au moyen d'un dispositif de serrage (32),
**caractérisé en ce que**
le tronçon d'appui (22) est réalisé sous forme de crochet, saisissant par l'arrière le contre-appui (23) réalisé sur l'élément (3).

2. Dispositif de raccordement selon la revendication 1, **caractérisé en ce que** l'extrémité de conduite (4) est munie d'une pièce de raccordement (7) sur laquelle est réalisée la saillie radiale (9).

3. Dispositif de raccordement selon la revendication 2, **caractérisé en ce que** la pièce de raccordement (7) est reliée par brasage à la conduite à fluide (2).

4. Dispositif de raccordement selon la revendication 1, **caractérisé en ce que** la saillie radiale (9) est formée d'un seul tenant sur la conduite à fluide (2).

5. Dispositif de raccordement selon la revendication 1, **caractérisé en ce que** la saillie radiale (9) est formée par une bride discoïde.

6. Dispositif de raccordement selon la revendication 1, **caractérisé en ce que** la surface d'étanchéité axiale (14) est une face plane.

7. Dispositif de raccordement selon la revendication 1, **caractérisé en ce qu'**une saillie d'appui (19) est voisine de la surface d'étanchéité axiale (14).

8. Dispositif de raccordement selon la revendication 1, **caractérisé en ce que** l'élément d'étanchéité (17) est un élément torique métallique.

9. Dispositif de raccordement selon la revendication 1, **caractérisé en ce que** l'élément d'étanchéité (17) est une rondelle métallique (37) revêtue d'un matériau d'étanchéité.

10. Dispositif de raccordement selon la revendication 9, **caractérisé en ce que** le matériau d'étanchéité est un élastomère.

11. Dispositif de raccordement selon la revendication 9, **caractérisé en ce que** le matériau d'étanchéité est un métal, dont la déformabilité est supérieure à celle de la rondelle métallique.

12. Dispositif de raccordement selon la revendication 1, **caractérisé en ce que** le levier de serrage (21) présente une ouverture (28) à travers laquelle s'étend la conduite à fluide (2).

13. Dispositif de raccordement selon la revendication 12, **caractérisé en ce que** l'ouverture (28) présente un bord fermé.

14. Dispositif de raccordement selon la revendication 12, **caractérisé en ce que** l'ouverture (28) présente un bord interrompu.

15. Dispositif de raccordement selon la revendication 1, **caractérisé en ce que** le tronçon d'appui (22) du levier de serrage (21) et le contre-appui (23) forment une charnière.

16. Dispositif de raccordement selon la revendication 1, **caractérisé en ce que** la surface de pressage (29) est une surface incurvée.

17. Dispositif de raccordement selon la revendication 1, **caractérisé en ce que** la surface de pressage (29) est en contact centralement avec la saillie radiale (9).

18. Dispositif de raccordement selon la revendication 1, **caractérisé en ce que** le dispositif de serrage (32) est formé par une vis (33).
